Europäisches Patentamt

(19) European Patent Office

Office européen des brevets

(11) Numéro de publication: **0 023 852**
**B1**

(12) # FASCICULE DE BREVET EUROPÉEN

(45) Date de publication du fascicule du brevet:
19.01.83

(51) Int. Cl.³: **H 04 L 7/10, H 04 N 7/00**

(21) Numéro de dépôt: **80401021.3**

(22) Date de dépôt: **04.07.80**

(54) **Procédé et dispositif pour la mise en phase d'une horloge locale.**

(30) Priorité: **27.07.79 FR 7919425**

(43) Date de publication de la demande:
**11.02.81 Bulletin 81/6**

(45) Mention de la délivrance du brevet:
**19.01.83 Bulletin 83/3**

(84) Etats contractants désignés:
**DE GB IT NL**

(56) Documents cités:
**FR-A-2 027 574**
**FR-A-2 313 827**
**IEEE TRANSACTIONS ON CONSUMER ELEC-TRONICS, vol. CE-25, no. 3, juillet 1979, New York, US Special Issue on Consumer Text Display Systems (1979, Chicago, Spring Conference on Consumer Electronics, 4 et 5 juin 1979) SWANSON et al.: »An integrated serial to parallel converter for Teletext application«, pages 359—361**

(73) Titulaire: **THOMSON-CSF, 173, Boulevard Haussmann, F-75379 Paris Cedex 08 (FR)**

(72) Inventeur: **Sauvanet, Maurice, "THOMSON-CSF" SCPI 173, Bld. Haussmann, F-75360 Paris Cedex 08 (FR)**

(74) Mandataire: **de Beaumont, Michel et al, THOMSON-CSF SCPI 173, Bld Haussmann, F-75379 Paris Cedex 08 (FR)**

BUNDESDRUCKEREI BERLIN

## Procédé et dispositif pour la mise en phase d'une horloge locale

La présente invention concerne un procédé pour la mise en phase d'une horloge locale, ainsi qu'un dispositif destiné à la mise en oeuvre de ce procédé, ceci dans le domaine des systèmes de réception de donées transmises sous forme numérique, en particulier les systèmes utilisant le support constitué par un signal vidéo de télévision pour véhiculer des informations codées sous forme numérique, ces systèmes étant connus sous l'appellation »vidéotexte«.

Il est rappelé que, dans ce genre de systèmes, des messages sont transmis sous forme numérique en utilisant un code binaire sans retour à zéro, par paquets de données pouvant provenir d'une ou de plusieurs sources, chaque paquet de données étant précédé d'une salve d'impulsions d'identification et de synchronisation, constituée par une succession de 1 et de 0 alternés. Cette salve constitue, pour le paquet de données qui suit, un »en-tête« destiné entre autres à l'identification de la source d'informations correspondante, mais son rôle est aussi de fournir un signal de référence, à fréquence et phase déterminées, sur lequel doit être accordée une horloge locale du récepteur à partir de laquelle est effectué le décodage du message contenu dans le paquet de données. Plus particulièrement, dans le système de »vidéotexte« ici considéré, les paquets de données sont insérés sur des lignes de télévision, chaque paquet étant ainsi placé entre deux signaux de »synchronisation ligne« habituels en télévision, la technique utilisée étant celle du multiplexage temporel des signaux numériques avec un signal d'image analogique, ce qui permet d'utiliser les bandes existantes de fréquence allouées à la diffusion des programmes de télévision. Les paquets de données sont ainsi transmis sur plusieurs lignes successives ou éventuellement sur une ligne isolée parmi d'autres contenant simplement l'information d'image de télévision. Pour un paquet de données correspondant à une ligne de télévision, on insère, après le signal de »synchronisation ligne«, la salve de synchronisation puis le paquet de données, la durée de ladite salve étant petite devant celle du paquet de données (dans un rapport inférieur à 1/10) et, surtout, devant les intervalles pouvant séparer deux paquets successifs.

La technique de transmission choisie exige un ensemble de démodulation se composant d'un récepteur de télévision associé à un système d'interface, apte à être connecté à un terminal sur lequel est reconstitué le message transmis. L'interface se compose d'une partie logique capable de sélectionner la source désirée, et d'une partie de démultiplexage qui extrait du signal vidéo les informations numériques et les remet en forme.

C'est cette partie de démultiplexage qui, pour reconstituer les données transmises par paquets, inclut l'horloge locale et les moyens de remise en phase de ladite horloge en fonction des impulsions de la salve précédant chaque paquet de données. Il convient de synchroniser en fréquence et en phase un oscillateur constituant cette horloge locale, durant une fraction de la durée de la salve, et de maintenir ensuite sa fréquence et sa phase, avec une stabilité suffisante, pendant un temps considérablement plus long, compte tenu du rapport indiqué plus haut entre la durée de la salve et celle du paquet de données.

Ces considérations conduisent, le plus souvent, à choisir une horloge locale constituée par un oscillateur très stable, par exemple à quartz, dont la fréquence est imposée par construction à une valeur double de celle des impulsions de la salve de synchronisation, ceci compte tenu du choix d'un codage sans retour à zéro. L'horloge de lecture idéale est celle dont les impulsions ont des fronts actifs placés au milieu des 1 et des 0 de la salve de synchronisation. Pour s'approcher de cette horloge idéale, on dérive, à partir d'un oscillateur local ayant la fréquence désirée, quatre signaux d'horloge de même fréquence mais présentant des déphasages égaux au quart de leur période commune. On peut ainsi partir d'un oscillateur stable de fréquence multiple de la fréquence d'horloge désirée, et obtenir les quatre signaux d'horloge de phases différentes par des divisions de fréquence successives, ce qui revient au même. Par des comparaisons de phase, entre chacun des signaux d'horloge et la salve de synchronisation, on détermine celui des signaux d'horloge qui présente un écart de phase minimum avec la salve de synchronisation, donc le signal d'horloge disponible ayant la phase la plus favorable, à défaut du signal idéal.

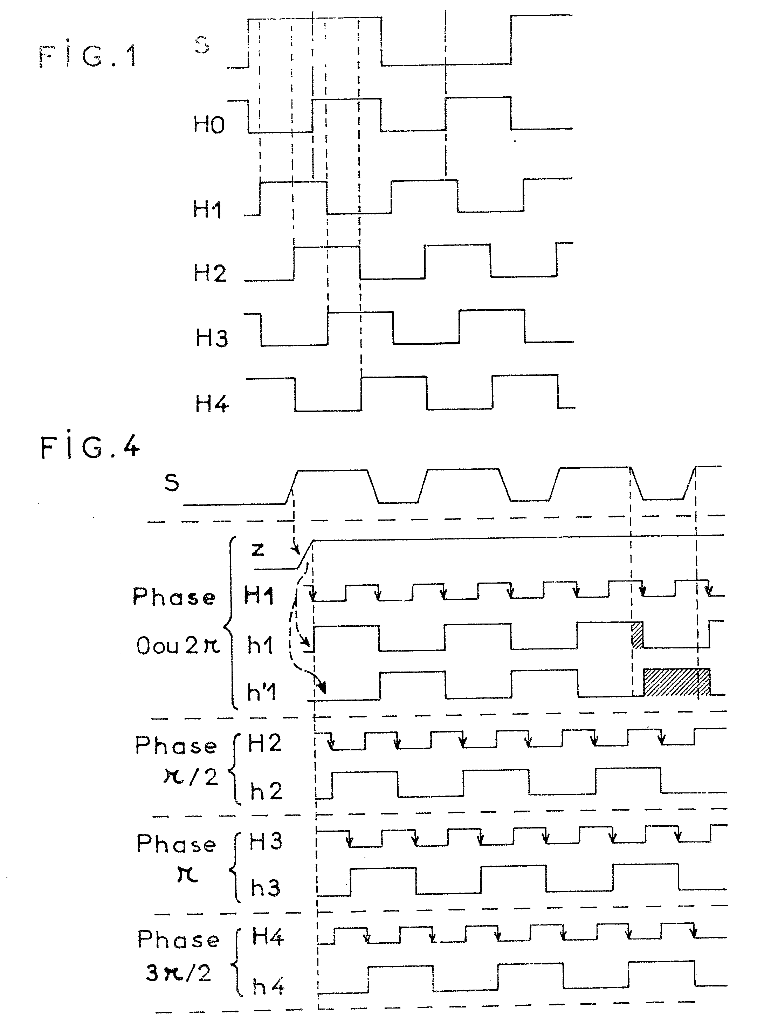

Ceci est illustré par le diagramme de la figure 1 du dessin annexé, sur lequel on a indiqué, de haut en bas:

— la salve de synchronisation S:
— les impulsions de l'horloge idéale HO, de fréquence double de celle de la salve, et dont les fronts montants sont exactement centrés sur les 1 et les 0 de ladite salve;
— les quatre signaux d'horloge H1, H2, H3 et H4, présentant des déphasages successifs égaux.

Dans l'exemple considéré, c'est le signal d'horloge H3 qui est sélectionné.

Pour effectuer cette sélection, il a été proposé des moyens de comparaison de phase instantanés, comprenant des bascules et un multiplexeur, dans lesquels une transition de la salve échantillonne deux phases de référence si quatre signaux d'horloge sont disponibles. Suivant que le résultat est un 1 ou un 0 logique sur chacune des deux voies de mesure du circuit, on peut en théorie déterminer laquelle des quatre phases disponibles est placée le plus favorablement par rapport à la salve de synchronisation. Cependant, il est difficile, dans la pratique, de distinguer une transition de la salve de synchronisation d'une impulsion de bruit parasite. De plus, les résultats obtenus ne sont cohérents que si le signal mis en forme, sur lequel s'effectue cette comparaison avec les phases d'horloge disponibles, présente une égalité rigoureuse de durée des 1 et des 0, c'est-à-dire si la prise de valeur moyenne donnant ce signal a été parfaite, et si ce signal ne comporte pas de flucutations aléatoires de phase importantes.

Pour éviter ces inconvénients, il est souhaitable de comparer les phases d'horloge locale non pas à une transition de la salve de synchronisation, mais à un état des bits de ladite salve, et de moyenner le résultat de comparaisons faites sur plusieurs bits. A cet effet, une solution consiste à effectuer la comparaison logique du signal constituant la salve avec le signal résultant de la division de fréquence par 2 d'une phase d'horloge locale, la durée moyenne des impulsions résultant de cette comparaison vairant proportionnellement au déphasage entre les deux signaux. Une comparaison analogique entre le résultat de l'opération précédente et des niveaux prédéterminés pourrait alors permettre la sélection de la phase d'horloge la plus favorable, notamment en comparant des niveaux de tension.

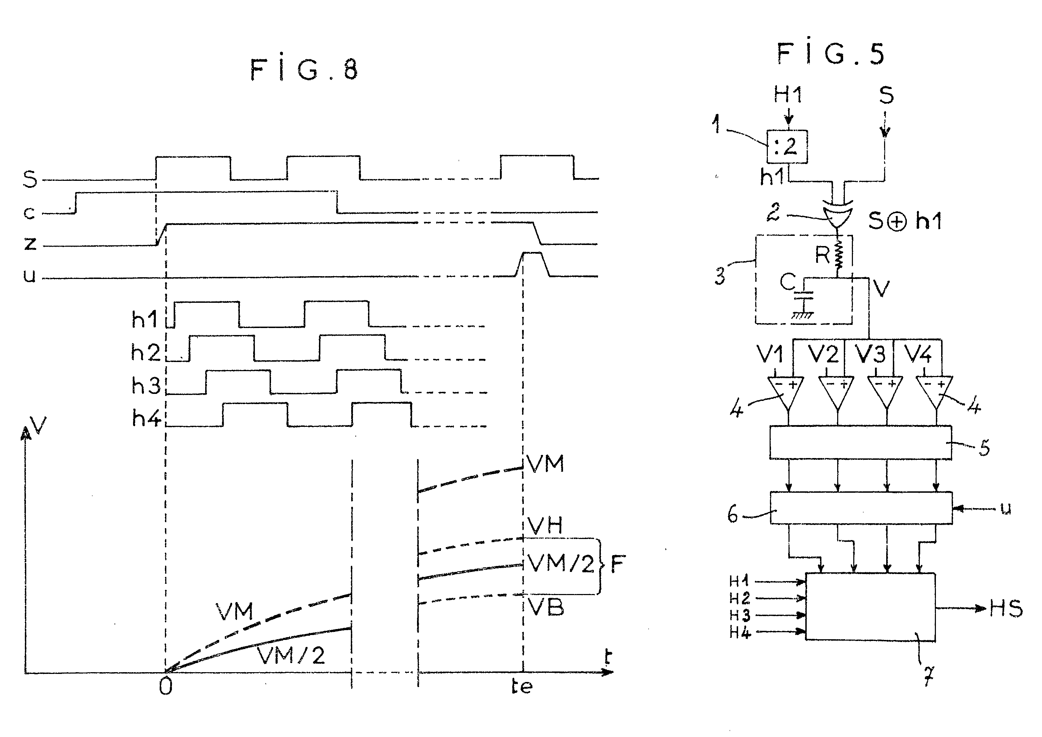

Pour illustrer ceci, la figure 5 représente, sous la forme d'un schéma de principe, un dispositif appartenant à l'état de la technique, dans lequel on effectue une sélection entre quatre phases d'horloge H1, H2, H3 et H4. La comparaison de phase est faite entre la salve de synchronisation S et l'une des phases d'horloge, par exemple celle notée H1. A cet effet, la phase d'horloge H1 est amenée à un diviseur de fréquence par 2, désigné par la référence 1, qui délivre un signal h1. Les bits de la salve S et le signal h1 sont amenés respectivement aux deux entrées d'une porte logique »OU-exclusif« 2, dont la sortie est reliée à un filtre passe-bas 3, constitué par un circuit R—C. Ce circuit délivre une tension V représentant la valeur moyenne, sur plusieurs bits de la salve S, du signal de comparaison obtenu à la sortie de la porte 2.

La tension V est amenée à l'une des entrées de quatre comparateurs 4, qui reçoivent aussi, à leur autre entrée, quatre niveaux de tension respectifs V1, V2, V3 et V4, représentatifs de la tension obtenue pour des déphasages correspondant à ceux des phases d'horloge H1, H2, H3 et H4. Les sorties des comparateurs sont reliées à une logique prioritaire 5, associée à un étage d'échantillonnage et de mémorisation 6. Enfin, un multiplexeur 7 a ses entrées de données reliées aux quatre signaux d'horloge diponibles H1 à H4, et ses entrées d'adresses reliées aux aux sorties de l'étage d'échantillonnage et de mémorisation 6. A la sortie du multiplexeur est délivrée la phase d'horloge sélectionnée HS, ceci à l'instant d'apparition d'une impulsion u déterminant l'échantillonnage et la mémorisation des signaux de sortie des comparateurs 4.

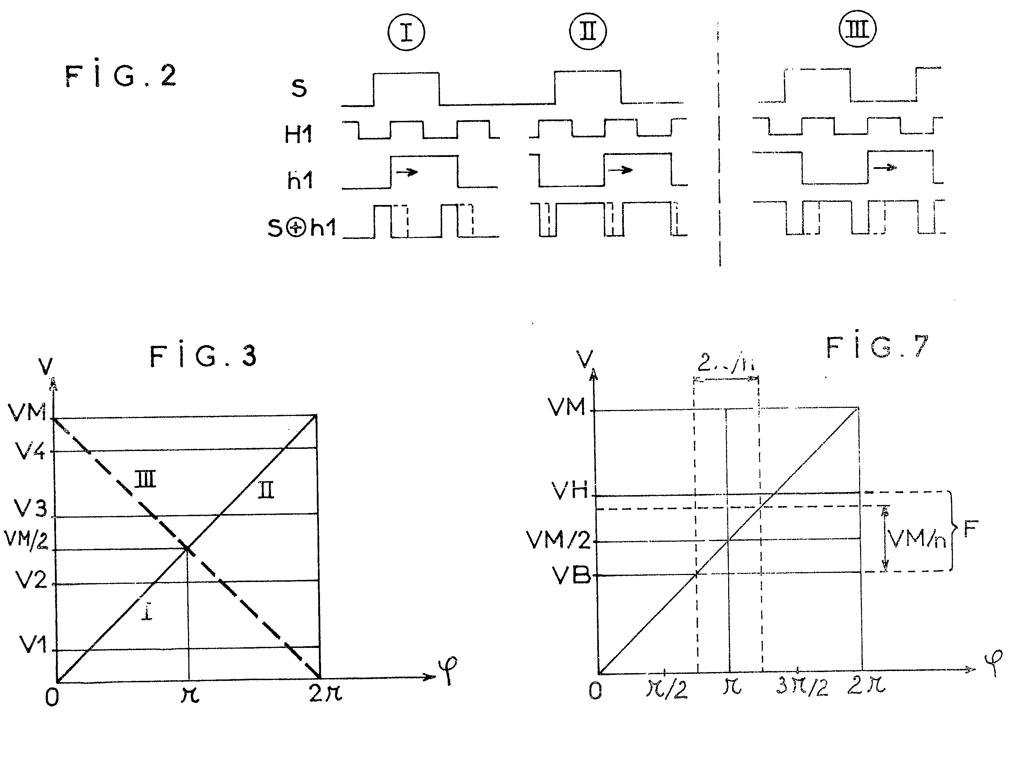

Toutefois, le procédé mis en oeuvre par ce dispositif comporte une indétermination qui se trouve illustrée par les diagrammes des figures 2 et 3. Sur le diagramme de la figure 2, les trois premières lignes sont respectivement la salve de synchronisation S, une phase d'horloge locale disponible H1 et le signal h1 résultatnt de la division de fréquence par 2. Sur la dernière ligne sont indiquées les impulsions obtenues par la combinaison des signaux S et h1 donnée par l'opération logique »OU-exclusif«, impulsions constituant le signal de comparaison.

Dans les cas I et II, comme illustré par les flèches et les pointillés de la figure 2, un plus grand retard de la phase d'horloge h1 par rapport à la salve S donne lieu à un allongement des impulsions du signal de comparaison. Au contraire, dans le cas III de la figure 2, un plus grand retard de la phase d'horloge h1 par rapport à la salve S donne lieu à un rétrécissement des impulsions du signal de comparaison. La confrontation des cas I et III, en particulier, montre que les résultats obtenus sont différents, bien qu'ils correspondent au même déphasage entre la phase d'horloge H1 et la salve S. Plus généralement, on note que le sens de variation (allongement ou rétrécissement) s'inverse quand le déphasage du signal h1 par rapport au signal S dépasse la largeur d'un 1 de la salve, ce qui donne deux valeurs possibles de la tension obtenue représentant la valeur moyenne du signal de comparaison, pour un même déphasage.

Ceci est illustré par le diagramme de la figure 3, où est porté, en abscisses, le retard $\Phi$ de la phase d'horloge H1 par rapport à la salve S, et en ordonnées, la tension moyenne V en sortie du comparateur de phase. Les valeurs et variations de cette tension V, comprise entre 0 et une valeur maximale VM, sont indiquées pour les cas précédents I, II et III. Si l'on met de côté le cas particulier d'un déphasage égal à $\pi$, ce sont à la fois les valeurs de la tension V et son sens de variation qui sont différents (comparer les droites correspondant aux cas I—II et au cas III).

Cet inconvénient pourrait être éliminé en conditionnant la mise en service du diviseur par 2, donnant le signal h1 à partir de la phase d'horloge H1, par un changement d'état déterminé du signal S (salve de synchronisation). Par exemple, dès l'apparition du premier 1 de cette salve de synchronisation, on autorise les changements d'état du diviseur par 2, préalablement maintenu à 0. Cette opération aussure un positionnement en principe déterminé des 1 du signal h1 par rapport aux 1 de la salve S, de manière à exclure par exemple le cas III précédemment considéré, et procure donc un sens de variation déterminé de la tension V, constituant le signal de comparaison, pour un déphasage croissant entre les signaux S et h1.

Cependant, par suite du léger retard inévitable du signal d'autorisation des changements d'état du diviseur par 2, par rapport à l'apparition du premier 1 de la salve, et aussi en raison des fluctuactions aléatoires de phase des fronts de la salve ainsi que des erreurs de centrage du découpage des connées au début de la salve, il existera nécessairement une indécision sur l'instant d'habilitation du diviseur par 2, relativement aux changements d'état de la salve. Il en résulte que, dans de cas extrêmes mais non exclus, le retard du signal h1 sur la salve S peut dépasser la largeur d'un bit de la salve, d'où une indication V erronée pour la phase d'horloge à sélectionner.

Ceci est rendu bien compréhensible par le diagramme de la figure 4 du dessin annexé, dont les lignes supérieures représentent la salve de synchronisation S, le signal z d'autorisation du diviseur, et le signal d'horloge disponible H1 dont la phase, par rapport à la salve S, est voisine de 0 ou de $2\pi$ (ce qui signifie que le front actif du signal H1 intervient près d'une transition de la salve). La division par 2 du signal d'horloge H1 donne alors deux signaux différents possibles, notés h1 et h'1, et il en résulte deux valeur différentes possibles à la sortie du comparateur de phase (comme illustré par les zones hachurées du diagramme). Cet inconvénient grave, apparaissant pour des phases proches de 0 ou $2\pi$ qui sont ainsi les »cas extrêmes« précités, n'existe pas pour les autres phases intermédiaires, comme illustré par les lignes inférieures de la figure 4 sur lesquelles sont représentés.

— le signal d'horloge H2 et le signal h2 en résultant par division par 2 (phase $\pi/2$),
— le signal d'horloge H3 et le signal h3 en résultant par division par 2 (phase $\pi$),
— le signal d'horloge H4 et le signal h4 en résultant par division par 2 (phase $3\pi/2$).

On note, en particulier, que l'initiation de la division par 2 est assurée sans problème, c'est-à-dire sans indécision de $\pi$, si l'on considère l'horloge de référence H3, correspondant au signal h3 décalé de $\pi$ par rapport au premier front de la salve S.

La présente invention vise à apporter une solution à l'ensemble des problèmes précédemment exposés, de manière à obtenir une sélection de phase d'horloge la plus favorable, autant que possible sans erreur, indétermination ou indécision.

A cet effet, l'invention a essentiellement pour objet un procédé pour la mise en phase d'une horloge locale, dans lequel on sélectionne un signal d'horloge le plus favorable parmi n signaux disponibles de même fréquence présentant des déphasages successifs égaux, par comparaison avec une salve de synchronisation, et dans lequel, plus particulièrement, on effectue une comparaison logique de phase entre des signaux obtenus par la division de fréquence par 2 de chacune des n phases d'horloge disponibles avec les bits de la salve de synchronisation, ces divisions par 2 étant autorisées dès l'apparition du premier bit de ladite salve, on moyenne le signal de comparaison obtenu sur plusieurs bits de cette salve de synchronisation, et on sélectionne la phase d'horloge qui correspond à un déphasage voisin de $\pi$.

On évite ainsi toutes les difficultés signalées plus haut, puisque:

— d'une part, la comparaison est effectuée sur des états de la salve de synchronisation, et non pas sur des transitions de cette salve; le résultat de la comparaison est moyenné sur plusieurs mesures successives, ce qui supprime les erreurs dues à des fluctuations aléatoires; et la mise en service des divisions par 2 est conditionnée par un changement d'état déterminé de la salve, donc impose un sens de variation déterminé du signal de comparaison, ce qui évite l'indétermination illustrée par les figures 2 et 3;
— d'autre part, l'indécision mise en évidence par la figure 4 est éliminée, en effectuant la comparaison avec la phase de chacune des phases d'horloge locale disponibles, puis en ne tenant compte que des résultats de comparaison correspondant à des phases d'horloge voisines de $\pi$ (et non en basant la sélection sur une échelle de tensions qui serait obtenue par la comparaison avec la salve d'une seule horloge de référence de phase arbitraire).

On notera que ce décalage de $\pi$ est optimal non seulement du point de vue de la division par 2 des signaux d'horloge destinés à la comparaison de phase, mais aussi pour la mesure de phase, puisqu'il correspond au croisement des deux sens de variation possibles de la tension V constituant le signal de comparaison (voir figure 3), donc peut donner la même valeur VM/2 de ce signal V pour deux polarités inverses du signal résultant de la division par 2. Le procédé selon l'invention constitue, ainsi, une sorte de »méthode de zéro« évitant tous les cas douteux.

De ces considérations résulte aussi un mode de mise en oeuvre préféré du procédé selon l'invention consistant en une »méthode de zéro«, dans laquelle les signaux de comparaison sont des tensions électriques obtenues à la sortie de circuits intégrateurs et dans laquelle ces tensions sont comparées avec des niveaux de tension représentant les valeurs de déphasage voisines de $\pi$. C'est ce qui est illustré sur la figure 3, où sont indiqués les quatre niveaux de tension V1, V2, V3 et V4, dans le cas de quatre phases disponibles, la comparaison étant effectuée dans l'intervalle entre V2 et V3.

Compte-tenu de ce que la phase d'horloge à retenir est celle qui correspond à un déphasage voisin de $\pi$, le procédé est mis en oeuvre en sélectionnant la phase d'horloge la plus favorable comme étant celle représentée par un niveau de tension qui se situe à l'intérieur d'un intervalle ou »fenêtre« centré sensiblement sur une valeur égale à la moitié de la valeur maximale probable de la tension constituant le signal de comparaison, soit la tension qui serait obtenue pour le déphasage maximal $2\pi$.

Suivant une caractéristique complémentaire du procédé, la valeur maximale probable, à partir de laquelle est définie la »fenêtre« précitée, est générée non pas à partir d'une tension continue d'alimentation, mais de manière à s'établir progressivement, en même temps et sensiblement avec les mêmes variations relatives que la tension constituant le signal de comparaison. Ceci permet d'effectuer la mesure définitive avec exactitude, avant que la valeur moyenne du signal de comparaison n'ait eu le temps de s'établir complètement. On peut, par exemple, établir progressivement la valeur précitée par moyennage d'un signal logique commençant à l'instant où débutent les divisions par 2.

La »fenêtre« de comparaison idéale aurait une largeur égale à VM/n, et elle serait également répartie de part et d'autre de la valeur centrale VM/2, si VM désigne la valeur maximale du signal de comparaison et n le nombre de phases d'horloge disponibles. Cependant, le moindre écart de la largeur réelle de cette »fenêtre« par rapport à la valeur théorique précédemment indiquée risquerait: soit de donner deux indications simultanées de sélection, d'où une indécision sur le choix de deux phases d'horloge consécutives, soit aucune indication, de sorte qu'aucune des phases disponibles ne serait sélectionnée, ce qui est plus grave.

Pour éviter cette difficulté, une solution entrant dans le cadre de la présente invention consiste à prévoir une »fenêtre« de largeur un peu supérieure à la valeur idéale VM/n, et légèrement décentrée, dans un sens déterminé, par rapport à la valeur centrale idéale VM/2, et à sélectionner celle des deux phases d'horloge disponibles, éventuellement obtenues par comparaison avec ladite »fenêtre«, qui est la plus en avance ou la plus en retard. En d'autres termes, on choisit volontairement une »fenêtre« de largeur supérieure à la valeur idéale, pour éviter définitivement le cas très gênant où aucune indication de sélection ne serait donnée, et l'on se fixe une règle logique permettant de privilégier l'une des indications obtenues, dans le cas encore possible où deux indications simultanées seraient obtenues, compte tenu de la largeur donnée à la »fenêtre«. De plus, il convient de compenser le décentrage de la »fenêtre«, en retenant la meilleure des deux indications obtenues dans ce dernier cas. A cet effet, la »fenêtre« est par exemple décentrée, dans le sens d'un plus grand retard de phase, par rapport à sa valeur idéale, et dans le cas de deux indications, on sélectionne celle qui correspond à la phase d'horloge diponible la plus en avance.

L'invention a également pour objet un dispositif électronique destiné à la mise en oeuvre de ce procédé de mise en phase d'une horloge locale.

Ce dispositif comprend essentiellement:

— tun diviseur par 2 de chacune des n phases d'horloge disponibles,
— des moyens d'autorisation de chaque diviseur par 2,
— des moyens de comparaison logiques entre les signaux obtenus à la sortie ce chaque diviseur par 2 et les bits de la salve de synchronisation,
— un circuit relié à la sortie desdits moyens de comparaison logiques, et apte à fournir une tension représentant la valeur moyenne du signal de comparaison obtenu sur plusieurs bits,
— d'autres moyens de comparaison, aptes à comparer la tension précitée avec des niveaux déterminés,
— un étage d'échantillonnage et de mémorisation, associé à une logique prioritaire,
— un multiplexeur, dont les entrées de données reçoivent les n signaux d'horloge disponibles, et dont les entrées d'adresses sont reliées aux sorties de l'étage précédent.

Dans une forme de réalisation simple, les moyens de comparaison logiques entre les signaux obtenus à la sortie de chaque diviseur par 2 et les bits de la salve de synchronisation sont constitués par une porte logique »OU-exclusif«.

Suivant une forme d'exécution particulière, le dispositif considéré comprend n diviseurs par 2, reliés à des moyens communs d'autorisation et recevant, respectivement, les n signaux d'horloge disponibles, la sortie de chaque diviseur par 2 étant reliée à une entrée d'une porte logique respective »OU-exclusif«, dont l'autre entrée reçoit les bits de la salve de synchronisation, la sortie de chacune des n portes »OU-exclusif« étant reliée, par l'intermédiaire de n filtres passe-bas donnant une tension représentative de la valeur moyenne du signal de comparaison obtenu à la sortie de chacune des portes précitées, à n comparateurs de tension à »fenêtre« recevant ous les deux mêmes valeurs de seuil, les sorties de ces comparateurs à »fenêtre« étant reliées à l'étage d'échantillonnage et de mémorisation.

Ces derniers comparateurs déterminent laquelle des indications des n comparateurs de phase, constitués par les n portes logiques »OU-exclusif«, tombe dans l'intervalle de tension précédemment appelé »fenêtre«, s'étendant de part et d'autre de la demi-valeur maximale VM/2. Pour obtenir que la valeur maximale VM soit établie progressivement, et que la »fenêtre« ait la largeur souhaitée et le léger décentrage désiré par rapport à la valeur VM/2, comme expliqué plus haut, on prévoit avantageusement, dans le dispositif selon l'invention, que les moyens d'autorisation des diviseurs par 2 ont leur sortie reliée également à un filtre passe-bas supplémentaire, identique à ceux placés en sortie des n portes »OU-exclusif«, et que la tension délivrée par ce filtre supplémentaire alimente un diviseur de tension donnant deux tensions proportionnelles correspondant aux limites de la »fenêtre« désirée, ces deux tensions étant amenées aux entrées de valeurs de seuil des n comparateurs à »fenêtre«. Grâce à cette disposition particulière, non seulement l'échantillonnage peut être effectué avant que la valeur moyenne du signal de comparaison n'ait eu le temps de s'établir complètement, comme on l'a déjà indiqué, mais encore, inversement, on peut mieux lisser les tensions résultant de la comparaison par les portes »OU-exclusif«, en abaissant la fréquence de coupure des filtres passe-bas.

De toute façon, l'invention sera mieux comprise à l'aide de la description qui suit, en référence au dessin schématique annexé représentant, à titre d'exemple non limitatif, une forme de réalisation de ce dispositif de mise en phase d'une horloge locale, et illustrant le fonctionnement de ce dispositif:

Figure 1 est un diagramme rappelant le principe général connu de la sélection du signal d'horloge disponible ayant la phase la plus favorable, dans le cas, pris pour exemple, de quatre phases disponibles;

Figures 2, 3 et 4 sont des diagrammes illustrant les cas d'indétermination ou d'indécision, que l'invention permet d'éviter;

Figure 5 est un schéma de principe d'un dispositif appartenant à l'état de la technique, dans le cas particulier d'une sélection effectuée entre quatre phases d'horloge;

Figure 6 est un schéma représentant un mode de réalisation du dispositif selon l'invention, dans le cas général d'une sélection effectuée entre n phases;

Figures 7 et 8 sont des diagrammes explicatifs, illustrant le fonctionnement du dispositif selon la figure 6.

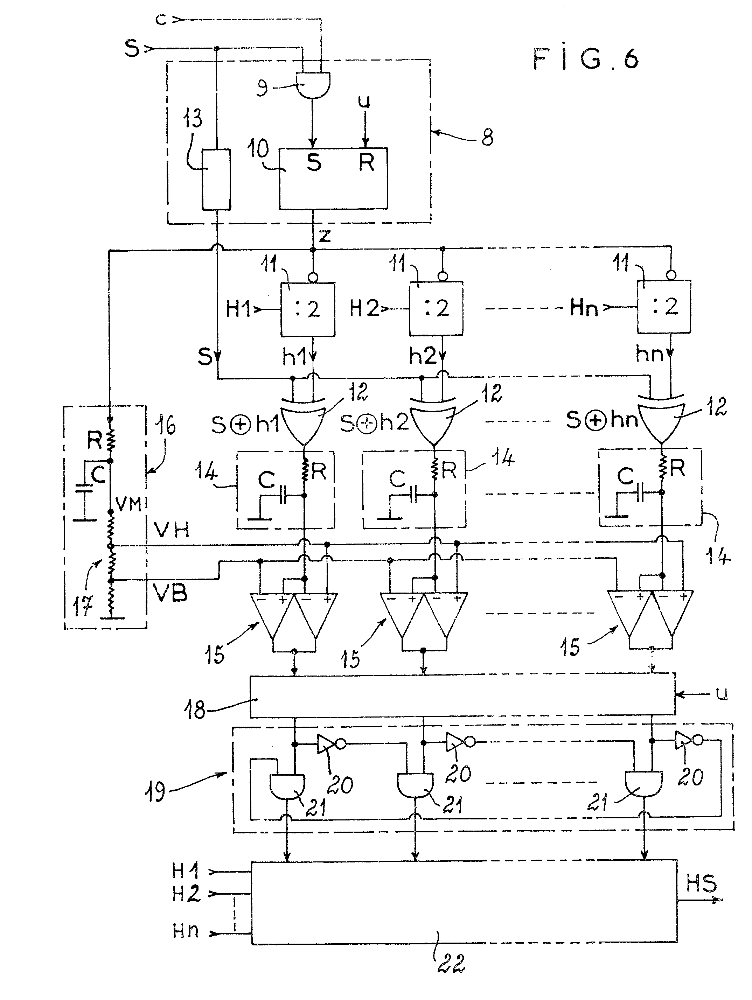

En figure 6, un circuit 8, permettant l'asservissement des divisions par 2 à un changement d'état d'un bit de la salve S, comprend une porte logique 9 et une bascule de type »R — S« 10; la porte 9 reçoit, à ses deux entrées, la salve de synchronisation S et une impulsion c donnant une autorisation de comptage (apparaissant au début de la »ligne« de télévision, dans l'application envisagée), tandis que la bascule 10 reçoit, à son entrée »S«, le signal de sortie de la porte 9 et, à son entrée »S«, le signal de sortie de la porte 9 et, à son entrée »R«, l'impulsion d'échantillonnage u. La bascule 10 délivre un signal d'autorisation noté z, et l'impulsion u, qui non seulement commande l'échantillonnage mais aussi réarme la bascule 10, apparaît après une durée déterminée comptée, par des moyens non représentés, à partir de l'apparition du signal z.

Ce signal z est amené aux entrées d'autorisation de n diviseurs de fréquence par 2 désignés par la référence 11. Ces diviseurs 11 engendrent, à partir des n signaux d'horloge disponibles H1, H2 ..., Hn, les signaux respectifs h1, h2 ..., hn.

La sortie de chaque diviseur 11 est reliée à une entrée d'une porte logique »OU-exclusif« 12. Toutes les portes 12 reçoivent, à leur seconde entrée, les bits de la salve de synchronisation S, décalés légèrement par un étage de retard 13 pour tenir compte du temps de réponse des diviseurs 11.

La sortie de chaque porte »OU-exclusif« 12 est reliée à un filtre passe-bas 14, constitué par un circuit R — C, qui délivre une tension représentant la valeur moyenne du signal de comparaison obtenu à la sortie de la porte 12 correspondante. Les sorties des n filtres passe-bas 14 sont reliées à n comparateurs de tension à »fenêtre« 15; chaque comparateur 15 peut être assimilé à la rénunion de deux comparateurs, dont l'un reçoit la tension délivrée par le filtre correspondant 14 à son entrée inverseuse et dont l'autre reçoit la même tension à son entrée non-inverseuse.

Les deux autres entrées de chaque comparateur à »fenêtre« 15, reçoivent des valeurs de seuil respectives VH et VB, communes à tous les comparateurs 15 et obtenues par un circuit 16. Ce circuit, relié à I sortie de la bascule 10 délivrant le signal z d'autorisation des diviseurs 11, comprend un filtre passe-bas supplémentaire constitué par un circuit R — C, identique aux n filtres placés en sortie des portes »OU-exclusif« 12. La tension moyenne VM, délivrée par le filtre passe-bas supplémentaire, alimente un diviseur de tension 17 constitué par trois résistances montées en série, les valeurs de seuil VH et VB étant les tensions prises aux points intermédiaires entre ces trois résistances.

Les sorties des n comparateurs à »fenêtre« 15 sont reliées à un étage d'échantillonnage et de mémoristation 18, pouvant être constitué par n bascules de type »D«. Les sorties de cet étage 18 sont reliées à une logique prioritaire 19, comprenant n inverseurs 20 associés à autant de portes 21, dont les sorties sont enfin reliées aux entrées d'adresses d'un multiplexeur 22. Ce dernier reçoit, à ses entrées de données, les n phases d'horloge disponibles H1, H2 ..., Hn, et il délivre, à l'instant d'apparition de l'impulsion d'échantillonnage u, la phase d'horloge sélectionnée HS.

Le rôle des n comparateurs à »fenêtre« 15 est de déterminer laquelle des tensions, issues des filtres passe-bas 14, est comprise dans l'intervalle défini par les valeurs limites VH et VB, et correspondant à un déphasage de l'ordre de $\pi$. Comme le montre le diagramme de la figure 7, la tension VM correspond à la valeur maximale probable de la tension V constituant le signal de comparaison, et l'intervalle dit »fenêtre« F, défini par les valeurs VH et VB, est sensiblement centré sur la demi-valeur maximale VM/2, et a une longueur sensiblement égale à VM/n, de manière à correspondre à l'intervalle de phase $\Phi$ centré sur la valeur $\pi$ et de largeur égale à $2\pi/n$. Plus exactement, la »fenêtre« F est de largeur un peu supérieure à VM/n, et légèrement décentrée, dans le sens des plus grandes valeurs de V, donc d'un plus grand retard de phase $\pi$, par

rapport à la valeur centrale théorique VM/n.

Le diagramme de la figure 8 montre les formes des différents signaux, qui interviennent dans une »mesure«. Les lignes supérieures représentent:

— les bits de la salve de synchronisation S, mise en forme,
— l'impulsion d'autorisation de comptage c,
— le signal z d'autorisation des compteurs, marquant l'instant initial (t = 0) de la mesure,
— l'impulsion d'échantillonnage u, apparaissant à un certain instant noté te.

Les diviseurs 11 fournissent, à partir de l'instant origine, les signaux régulièrement décalés h1, h2 ..., qui sont comparés avec la salve S par les portes logiques »OU-exclusif« 12, tandis que les filtres passe-bas 14 établissent, progressivement, les valeurs moyennes des n signaux de comparaison ainsi obtenus. Simultanément, le filtre passe-bas supplémentaire du circuit 16 génère la tension VM, ainsi que les tensions intermédiaires VH et VB qui lui sont proportionnelles, en les établissant progressivement, de la même manière que les valeurs moyennes des signaux de comparaison, comme illustré par les courbes de la partie inférieure de la figure 8. A l'instant d'échantillonnage te, les tensions moyennes aux sorties des n portes »OU-exclusif« 12 sont comparées avec la fenêtre »F« définie par les valeurs des tensions VH et VB obtenues au même instant, ce qui permet d'obtenir une indication de l'horloge disponible qui correspond au déphasage le plus voisin de $\pi$.

Dans le cas où l'on obtient la sortie des comparateurs une double indication, ce qui n'est pas exclu compte tenu de la largeur choisie pour la »fenêtre« F, la logique prioritaire 19 intervient, de manière à retenir la phase d'horloge la plus en avance, sur les deux phases successives correspondant à la double indication obtenue.

Le multiplexeur 22 sélectionne ainsi, dans tous les cas, un seul signal d'horloge HS qui est utilisé pour la lecture du paquet de données inséré sur la ligne de télévision, à la suite de la salve de synchronisation S, dans le système de »vidéotexte« auquel s'applique le disp sitif de mise en phase d'une horloge locale selon l'invention.

Comme il va de soi, l'invention ne se limite pas à la seule forme de réalisation de ce dispositif qui a été décrite ci-dessus à titre d'exemple; elle en embrasse, au contraire, toutes les variantes de réalisation comportant des moyens équivalents et mettant en œuvre le même procédé de mise en phase.

Ainsi, les circuits de la figure 6, applicables dans leur principe à un nombre de phases n quelconque, deviennent en pratique d'une réalisation très »lourde«, lorsque le nombre de phases disponibles dépasse 4 à 6, et il peut être intéressant, dans le cas où ce nombre n est assez grand, de mettre en œuvre une variante permettant d'effectuer la sélection en deux temps: par exemple, pour n = 8, on fait dans un premier temps une compraraison avec 4 des huit phases (H1, H3, H5 et H7) suivant le principe de l'invention, avec des circuits analogues à ceux de la figure 6, puis dans un second temps on effectue une mesure fine du déphasage de l'horloge ainsi présélectionnée, au moyen d'un circuit plus simple tel que celui de la figure 5 (où les risques d'erreur sont diminués puisque la phase d'horloge présélectionnée est déjà voisine de $\pi$). On peut également effectuer une présélection d'une phase parmi n par le procédé et le dispositif selon l'invention, puis affiner la mise en phase par un procédé et un dispositif quelconques.

**Revendications**

1. Procédé pour la mise en phase d'une horloge locale (HS), dans lequel on sélectionne un signal d'horloge le plus favorable parmi n signaux disponibles (H1, ..., Hn) de même fréquence présentant des déphasages successifs égaux, par comparaison avec une salve de synchronisation (S), dans lequel on effectue une comparaison logique de phase entre des signaux obtenus par la division de fréquence par 2 de chacune des n phases d'horloge disponibles avec les bits de la salve de synchronisation, dans lequel on moyenne le signal de comparaison obtenu sur plusieurs bits de cette salve de synchronisation (S), et dans lequel on sélectionne la phase d'horloge qui correspond à un déphasage voisin de $\pi$, caractérisé en ce qu'on sélectionne la phase d'horloge la plus favorable comme étant celle représentée par un niveau de tension qui se situe à l'intérieur d'un intervalle ou »fenêtre« $(V_B - V_H)$ centré sensiblement sur une valeur égale à la moitié de la valeur maximale probable VM de la tension constituant le signal de comparaison, valeur maximale qui serait obtenue pour le déphasage maximal $2\pi$.

2. Procédé selon la revendication 1, caractérisé en ce que les divisions par 2 sont autorisées dès l'apparition du premier bit de la salve de synchronisations (S).

3. Procédé selon la revendication 1 ou 2, caractérisé en ce que la valeur maximale probable, à partir de laquelle est définie la »fenêtre« $(V_B - V_H)$ précitée, est générée non pas à partir d'une tension continue d'alimentation, mais de manière à s'établir progressivement, en même temps et sensiblement avec les mêmes variations relatives que la tension constituant le signal de comparaison.

4. Procédé selon la revendication 3, caractérisé en ce qu'on établit progressivement la valeur maximale précitée par moyennage d'un signal logique commençant à l'instant où commencent les divisions par 2.

5. Procédé selon l'une quelconque des revendications 1 à 4, caractérisé en ce que la »fenêtre« est prévue de largeur un peu supérieure à la valeur idéale VM/n, et légèrement décentrée, dans un sens déterminé, par rapport à la valeur centrale idéale VM/2, et en ce qu'on sélectionne celle des deux phases d'horloge disponibles, éventuellement obtenues par comparaison avec ladite »fenêtre«, qui est la plus en avance ou la plus en retard.

6. Procédé selon la revendication 5, caractérisé en ce que la »fenêtre« est décentrée, dans le sens d'un plus grand retard de phase, par rapport à sa valeur idéale, et en ce que, dans le cas de deux indications, on sélectionne celle qui correspond à la phase d'horloge disponible la plus en avance.

7. Procédé pour la mise en phase d'une horloge locale, caractérisé en ce que, dans un premier temps, on effectue une comparaison avec une partie du nombre total n de phases d'horloge disponibles, selon l'une quelconque des revendications précédentes, de manière à présélectionner une phase, et en ce que, dans un second temps, on procède à un affinage de la mise en phase.

8. Dispositif de mise en phase d'une horloge locale, destiné à la mise en œuvre du procédé selon l'une quelconque des revendications 1 à 6, caractérisé en ce qu'il comprend en combinaison:

— un diviseur (11) par 2 de chacune des n phases d'horloge disponibles,
— des moyens d'autorisation (2) de chaque diviseur par 2, en relation avec des changements d'état de la salve de synchronisation,
— des moyens de comparaison logiques (12) entre les signaux obtenus à la sortie de chaque diviseur par 2 et les bits de la salve de synchronisation,
— un circuit (14) relié à la sortie de chaqu'un desdits moyens de comparaison logiques (12) et aptes à fournir une tension représentant la valeur moyenne du signal de comparaison obtenu sur plusieurs bits,
— d'autres moyens de comparaison (15), aptes à comparer la tension précitée avec des niveaux déterminés,
— un étage d'échantillonnage et de mémorisation (19), associé à une logique prioritaire,
— un multiplexeur (22), dont les entrées de données reçoivent les n signaux d'horloge disponibles, et dont les entrées d'adresses sont reliées aux sorties de l'étage précédent.

9. Dispositif selon la revendication 8, caractérisé en ce que les moyens de comparaison logiques entre les signaux obtenus à la sortie de chaque diviseur par 2 et les bits de la salve de synchronisation sont constitués par une porte logique »OU-exclusif«.

10. Dispositif selon la revendication 9, caractérisé en ce qu'il comprend n diviseurs par 2 reliés à des moyens communs d'autorisation et recevant, respectivement, les n signaux d'horloge disponibles (H1, ..., Hn), la sortie de chaque diviseur par 2 étant reliée à une entrée d'une porte logique respective »OU-exclusif«, dont l'autre entrée reçoit les bits de la salve de synchronisation, la sortie de chacune des n portes »OU-exclusif« étant reliée, par l'intermédiaire de n filtres passe-bas donnant une tension représentative de la valeur moyenne du signal de comparaison obtenu à la sortie de chacune des portes précitées, à n comparateurs de tension à »fenêtre« recevant tous les deux mêmes valeurs de seuil, les sorties de ces comparateurs à »fenêtre« étant reliées à l'étage d'échantillonnage et de mémorisation (19).

11. Dispositif selon la revendication 10, plus particulièrement destiné à la mise en œuvre du procédé selon la revendication 5, caractérisé en ce que les moyens d'autorisation des diviseurs par 2 ont leur sortie reliée également à un filtre passe-bas supplémentaire, identique à ceux placés en sortie des n portes »OU-exclusif«, et en ce que la tension délivrée par ce filtre supplémentaire alimente un diviseur de tension (17) donnant deux tensions proportionnelles correspondant aux limites de la »fenêtre« désirée, ces deux tensions étant amenées aux entrées de valeurs de seuil des n comparateurs (15) à »fenêtre«.

12. Dispositif selon la revendication 11, caractérisé en ce que les moyens d'autorisation des diviseurs par 2, également reliés à un filtre passe-bas supplémentaire, sont constitués par un circuit comprenant une porte logique (9) et une bascule (10) de type »R > S«, la porte recevant, à ses deux entrées, la salve de synchronisation (S) et une impulsion (c) donnant une autorisation de comptage, tandis que la bascule reçoit, à son entrée »S«, le signal de sortie de la porte et, à son entrée »R«, l'impulsion (u) d'échantillonnage.

13. Dispositif selon l'une quelconque des revendications 8 à 12, caractérisé en ce que l'étage d'échantillonnage et de mémorisation (19), recevant l'impulsion précitée, est constitué par n bascules de type »D«.

14. Dispositif selon l'une quelconque des revendications 8 à 13, caractérisé en ce que la logique prioritaire comprend n inverseurs (20), associés à autant de portes (21).

15. Dispositif selon l'une quelconque des revendications 8 à 14, caractérisé en ce qu'il est appliqué à un système de »vidéotexte« pour la mise en phase d'une horloge de lecture de paquets de données dont chacun est inséré sur une ligne de télévision et précédé d'une salve de synchronisation.

## Patentansprüche

1. Verfahren zur Phasensteuerung eines lokalen Zeitgebers (HS), bei dem unter n verfügbaren Signalen (H1 ... Hn) gleicher Frequenz mit aufeinanderfolgenden gleichen Phasenverschiebungen das günstigste Signal gewählt wird durch Vergleich mit einer Synchronisierungssalve (S), wobei ein logischer Phasenvergleich zwischen den durch Frequenzteilung durch den Quotienten 2 erhaltenen Signalen jeder der verfügbaren n Zeitgeberphasen und den Bits der Synchronisierungssalve erfolgt und der Mittelwert des Vergleichssignals bestimmt wird, welches durch den Vergleich auf mehreren Bits dieser Synchronisierungssalve (S) erzeugt wurde, und wobei die einer Phasenverschiebung $\pi$ entsprechende Zeitgeberphase gewählt wird, dadurch gekennzeichnet, daß man die günstigste Zeitgeberphase in Form derjenigen Phase wählt, die durch einen Spannungspegel dargestellt ist, welcher innerhalb eines Intervalls oder »Fensters« (VB−VH) liegt, das wesentlich auf einem dem wahrscheinlichen halben Maximalwert VM gleichen Wert der das Vergleichssignal bildenden Spannung zentriert ist, welcher Maximalwert der Maximalphasenverschiebung $2\pi$ entspräche.

2. Verfahren nach Anspruch 1, dadurch gekennzeichnet, daß die Teilungen durch 2 bei dem Auftreten des ersten Bits der Synchronisierungssalve (5) zugelassen werden.

3. Verfahren nach Anspruch 1 oder 2, dadurch gekennzeichnet, daß der wahrscheinliche Maximalwert, aufgrund dessen das vorgenannte »Fenster« (VB−VH) definiert ist, nicht aufgrund einer Gleichstromspeisespannung definiert wird, sondern derart, daß er sich graduell einstellt, gleichzeitig und unter den wesentlich gleichen relativen Schwankungsbedingungen wie diejenigen der das Vergleichssignal bildenden Spannung.

4. Verfahren nach Anspruch 3, dadurch gekennzeichnet, daß man graduell den vorgenannten Maximalwert dadurch bestimmt, daß man einen Mittelwert eines logischen Signals von demjenigen Augenblick ab ermittelt, wo die Teilungen durch 2 beginnen.

5. Verfahren nach einem der Ansprüche 1 bis 4, dadurch gekennzeichnet, daß die Breite des »Fensters« etwas größer ist, als der ideale Wert VM/n, und daß das »Fenster« in einer vorbestimmten Richtung leicht in bezug auf den zentralen Wert VM/2 dezentriert ist, wobei man von den beiden verfügbaren Zeitgeberphasen, die ggf. durch Vergleich mit dem »Fenster« erhalten wurden, diejenige wählt, die am meisten vorläuft oder am meisten nachläuft.

6. Verfahren nach Anspruch 5, dadurch gekennzeichnet, daß das »Fenster« in der Richtung des größten Phasennachlaufs in bezug auf seinen idealen Wert dezentriert ist, und daß beim Vorliegen zweier Anzeigen diejenige gewählt wird, die der am meisten vorlaufenden verfügbaren Zeitgeberphase entspricht.

7. Verfahren zur Phasensteuerung eines lokalen Zeitgebers, dadurch gekennzeichnet, daß zunächst ein Vergleich mit einem Teil des Gesamtanzahl n verfügbarer Zeitgeberphasen erfolgt, derart, daß eine Phase vorgewählt wird, sowie dadurch, daß sodann die Phasensteuerung verfeinert wird.

8. Vorrichtung zur Phasensteuerung eines lokalen Zeitgebers für die Durchführung des Verfahrens nach einem der Ansprüche 1 bis 6, dadurch gekennzeichnet, daß sie in Kombination umfaßt:

— einen Teiler (11) zum Teilen durch 2 einer jeden verfügbaren Zeitgeberphase,
— Genehmigungsmittel (2) für jeden Teiler durch 2, im Zusammenhang mit den Zustandsänderungen der Synchronisierungssalve,
— logische Vergleichsmittel (12) zum Vergleichen der am Ausgang eines jeden Teilers durch 2 erhaltenen Signale mit den Bits der Synchronisierungssalve,
— ein an den Ausgang eines jeden logischen Vergleichsmittels (12) angeschlossenen Stromkreis (14), wobei diese Mittel fähig sind, eine den Mittelwert des aufgrund mehrerer Bits erhaltenen Signals zu liefern,
— weitere Vergleichsmittel zum Vergleichen der vorgenannten Spannung mit vorbestimmten Wertpegeln,
— eine Musterungs- und Speicherstufe (19), die mit einem logischen Prioritätskreis zusammenwirkt,
— einen Multiplexer (22), dessen Werteingänge die verfügbaren n Zeitgebersignale empfangen, und dessen Adresseneingänge an die vorhergehende Stufe angeschlsosen sind.

9. Vorrichtung nach Anspruch 8, dadurch gekennzeichnet, daß die logischen Mittel zum Vergleich der am Ausgang jedes Teilers durch 2 und der Bits der Synchronisierungssalve durch ein logisches »ODER-EXCLUSIV«-Gatter gebildet sind.

10. Vorrichtung nach Anspruch 9, dadurch gekennzeichnet, daß sie n Teiler durch 2 aufweist, die mit gemeinsamen Genehmigungsmitteln verbunden sind und jeweils die verfügbaren n Zeitgebersignale (H1 ... Hn) empfangen, wobei der Ausgang eines jeden Teilers durch 2 mit dem Eingang eines entsprechenden logischen »ODER-EXCLUSIV«-Gatters verbunden ist, dessen anderer Eingang die Bits der Synchronisierungssalve empfängt, wobei der Ausgang eines jeden der n »ODER-EXCLUSIV«-Gatter über n Niederpaßfilter, die eine den Mittelwert des am Ausgang eines jeden der genannten Gatter erzielten Signals darstellende Spannung liefern, mit n Spannungsvergleichern mit »Fenstern« verbunden sind, welche alle die beiden Schwellenwerte empfangen, und wobei die Ausgänge dieser Vergleicher mit »Fenstern« an die Musternahme- und Speicherstufe (19) angeschlossen sind.

11. Vorrichtung nach Anspruch 10, insbesondere für die Durchführung des Verfahrens nach Anspruch 5, dadurch gekennzeichnet, daß die Genehmigungsmittel der Teiler durch 2 ferner über ihren Ausgang mit einem zusätzlichen Niederpaßfilter verbunden sind, welcher den am Ausgang der n »ODER-EXCLUSIV«-Gatter angeordneten Filtern gleich ist, sowie dadurch, daß dieser zusätzliche Filter einen Spannungsteiler (17) speist, der zwei proportionale Spannungen liefert, die den Grenzen des gewünschten »Fensters« entsprechen, wobei diese beiden Spannungen an die Schwellenwerteingänge der n Vergleicher (15) mit »Fenstern« angelegt ist.

12. Vorrichtung nach Anspruch 11, dadurch gekennzeichnet, daß die Genehmigungsmittel der Teiler durch 2, die ebenfalls mit einem zusätzlichen Niederpaßfilter verbunden sind, durch einen Stromkreis gebildet werden, der ein logisches Gatter (9) und eine »R — S«-Kippschaltung (10) umfaßt, wobei die beiden Eingänge des Gatters die Synchronisierungssalve (S) und eine das Zählen genehmigende Impulsion (c) empfangen, während der Eingang »S« der Kippschaltung das Ausgangssignal des Gatters und der Eingang »R« dieser Kippschaltung die Musterungsimpulsion (u) empfängt.

13. Vorrichtung nach einem der Ansprüche 8 bis 12, dadurch gekennzeichnet, daß die Musternahme- und Speicherstufe (19), die die vorgenannte Impulsion empfängt, aus n »D« Kippschaltungen besteht.

14. Vorrichtung nach einem der Ansprüche 8 bis 13, dadurch gekennzeichnet, daß der logische Prioritätsstromkreis n Wender (20) umfaßt, die mit einer gleichen Anzahl von Gattern (21) zusammenwirken.

15. Vorrichtung nach einem der Ansprüche 8 bis 14, dadurch gekennzeichnet, daß sie auf ein sog. »Videotext«-System angewandt ist, zwecks Phasensteuerung eines Zeitgebers zum Lesen von Wertepaketen, deren jedes mit jeweiligem Vorausgehen einer Synchronisierungssalve in eine Fernsehlinie eingeführt ist.

**Claims**

1. A process for phase-controlling a local clock (HS), comprising selecting from n available clock signals (H1 ... Hn) the most favorable signal of identical frequency with equal successive phase shifts, with reference to a synchronisation salve (S), wherein a logic phase comparison is carried out between the signals obtained by dividing by 2 each one of the available clock phases with the bits of the synchronisation salve, wherein the mean value of the comparison signal obtained on several bits of said synchronisation salve (IS) is established, and wherein the clock phase corresponding to a phase shifting close to $\pi$ is selected, characterized in that the most favorable clock phase is selected as being the one which is represented by a voltage level comprised within an interval or »window« $(V_B - V_H)$ substantially centered on a value equal to half the probable maximum value VM of the voltage constituting the comparison signal, which maximum value would be obtained under maximum $2\pi$ phase shifting conditions.

2. A process according to claim 1, characterized in that the operations of dividing by 2 are authorized as soon as appears the first bit of the synchronisation salve (S).

3. A process according to any one of claims 1 and 2, characterized in that the probable value, on the basis of which the said »window« $(V_B - V_H)$ is determined, is not generated from a direct feeding voltage, but in such a way that it will be established gradually, at the same time and substantially with the same relative variations as those of the voltage constituting the comparison signal.

4. A process according to claim 3, characterized in that it comprises establishing gradually the afore-mentioned maximum value by determining the mean value of a logic signal starting at the moment when the dividing by 2 is started.

5. A process according to any one of claims 1 to 4, characterized in that said »window« has a width slightly greater than the ideal value VM/n, and is slightly off-centered in a predetermined direction with respect to the central ideal value VM/2, and in that one selects, from the two available clock phases possibly obtained by comparison with said »window«, that phase which is the most advanced or the most retarded.

6. A process according to claim 5, characterized in that the »window« is off-centered in the direction corresponding to the greater phase retarding, with respect to its ideal value, and in that, in the case of two indications, one selects that indication which corresponds to the most advanced available clock phase.

7. A process for phase-controlling a local clock, characterized in that, in a first step, one compares with a part of the total number n of available clock phases, according to any one of the preceding claims, so as to preselect a phase, and in that, in a second step, the phase-controlling is refined.

8. A device for phase-controlling a local clock, adapted to carry out the process of any one of claims 1 to 6, characterized in that it comprises, in combination:

— a divisor (11) for dividing by 2 each one of the available n clock phases;
— authorising means (2) for authorising each divisor by 2 in relation with the changes of state of the synchronisation salve;
— logic-comparing means (12) for comparing the signals obtained at the output of each divisor by 2 and the bits of the synchronisation salve;
— a circuit (14) connected to the output of every one of said logic comparing means (12) and adapted to provide a voltage representing the mean value of the comparison signal obtained on a plurality of bits;
— further comparing means (15) adapted to compare the before-mentioned voltage to determined levels;
— a sampling and memorizing stage (19) associated to a priority logic circuit;
— a multiplexer (22) the data inputs of which receive the n available clock signals, and the address inputs of which are connected to the outputs of the preceding stage.

9. A device according to claim 8, characterized in that the logic comparing means comparing the signals obtained at the output of every divisor by 2 and the bits of the synchronisation salve are constituted by a logic »OR-EXCLUSIVE« gate.

10. A device according to claim 9, characterized in that it comprises n divisors by 2 connected to common authorisation means and receiving, respectively, the n available clock signals (H1 . . . Hn), the output of each divisor by 2 being connected to an input of a respective logic »OR-EXCLUSIVE« gate, the other input of which receives the bits of the synchronisation salve, the output of each one of the n »OR-EXCLUSIVE« gates being connected through n low-pass filters which provide a voltage representing the mean value of the comparison signal obtained at the output of each one of the before-mentioned gates to n »window« voltage comparators which both receive identical threshold values, the outputs of said »window« comparators being connected to the sampling and memorizing stage (19).

11. A device according to claim 10, particularly adapted to carry out the process claimed in claim 5, characterized in that authorizing means of the divisors by 2 have their output also connected to a supplementary low-pass filter identical with the ones provided at the output of the n »OR-EXCLUSIVE« gates, and in that the voltage delivered by said supplementary filter feeds a voltage divider (17) providing two proportional voltages corresponding to the limits of the desired »window«, said two voltages being transmitted to the threshold value inputs of the n »window« comparators (15).

12. A device according to claim 11, characterized in that said authorisation means of the divisors by 2, which are also connected to a supplementary low-pass filter, are constituted by a circuit comprising a logic gate (9) and a »R − S« type flip-flop circuit, said gate receiving at its two inputs the synchronisation salve (S) and a pulse (c) authorising the counting, whereas the flip-flop circuit receives at its »S« input the output signal of the gate and at its »R« input the sampling pulse (u).

13. A device according to any one of claims 8 to 12, characterized in that the sampling and memorizing stage (19) which receives the abpvementioned pulse, is constituted by n »D« type flip-flop circuits.

14. A device according to any one of claims 8 to 13, characterized in that the prioitary logic circuit comprises n inverters (20) which are associated to an equal number of gates (21).

15. A device according to any one of claims 8 to 14, characterized in that it is applied to a »videotext« system for phase-controlling a clock adapted to read data packages each of which is inserted on a television line and preceded by a synchronisation salve.

FIG.1

S

H0

H1

H2

H3

H4

FIG.4

S

Phase
0 ou 2π

z

H1

h1

h'1

Phase
π/2

H2

h2

Phase
π

H3

h3

Phase
3π/2

H4

h4

0 023 852

FIG.2

I    II    III

S

H1

h1

S⊕h1

FIG.3

V

VM
V4
V3
VM/2
V2
V1

III    II

I

0        π        2π        $\varphi$

FIG.7

V

VM
VH
VM/2
VB

VM/n } F

2·/n

0    π/2    π    3π/2    2π    $\varphi$

15

FIG.8

FIG.5

0 023 852

FIG.6